# EUROPEAN PATENT APPLICATION

(11) **EP 4 839 000 A1**
(43) Date of publication of application: **11.11.2026**
(21) Application number: 26176816.2
(22) Date of filing: 06.05.2026
(51) Int. Cl.: H04W 76/11, H04W 36/00, H04W 76/12, H04W 76/22

(54) **METHODS FOR SSC MODE HANDLING WITH DISTRIBUTED NAS**

(30) Priority: 08.05.2025 US 202519203022
(71) Applicant: InterDigital Patent Holdings, Inc., Wilmington, DE 19809 (US)
(72) Inventor: SON, Jung Je, WARRINGTON, 18976 (US); SETHI, Anuj, OTTAWA, K4M 0J6 (CA); WANG, Guanzhou, BROSSARD, J4Z 3S7 (CA); FERDI, Samir, KIRKLAND, H9H 3V9 (CA); ABBAS, Taimoor, SAINTE-JULIE, J3E 3H2 (CA)
(74) Representative: AWA Sweden AB

(57) **Abstract**

A system, device and method for service and session continuity (SSC) mode handling with session management (SM) context sharing performed in a RAN node are disclosed. The method includes receiving a protocol data unit (PDU) session request message from a session management function (SMF), the PDU session request message including a PDU session identifier (ID) and information identifying a target SMF, receiving a PDU session establishment request message from a wireless transmit and receive unit (WTRU) for a data network name (DNN) associated with the target SMF, transmitting, to the target SMF, a PDU session establishment message to establish a new PDU session, receiving a PDU session establishment response from the target SMF, the response including quality of service (QoS) flows and Qos parameters, and transmitting a PDU session establishment response to the WTRU.

## Description

### CROSS-REFERENCE TO RELATED APPLICATION

This Application claims priority to and the benefit of U.S. Non-Provisional Application No. 19/203,022 filed on May 8, 2025, the entire contents of which being incorporated herein by reference as if fully set forth below in its entirety and for all applicable purposes.

### BACKGROUND

5G System Architecture supports the Service and Session Continuity (SSC) of IP traffic for the WTRU's application. The SSC mode associated with a protocol data unit (PDU) session does not change during the lifetime of a PDU Session. Further, the Next Generation Network Architecture is expected to continue and push the shift started in 5G to embrace a cloud native implementation in the core network. The push to bring core network user plane and other functions closer to the edge may continue to be motivated by the need to support ever increasing traffic levels and lower latencies (e.g., XR, meta-verse, AIML).

### SUMMARY

When a Session Management Function (SMF) detects PDU session reestablishment, SMF discover new SMF and exchange session management (SM) context to reduce any procedure for PDU session reestablishment.

A system, device and method for service and session continuity (SSC) mode handling with session management (SM) context sharing performed in a RAN node are disclosed. The method includes receiving a protocol data unit (PDU) session request message from a session management function (SMF), the PDU session request message including a PDU session identifier (ID) and information identifying a target SMF, receiving a PDU session establishment request message from a wireless transmit and receive unit (WTRU) for a data network name (DNN) associated with the target SMF, transmitting, to the target SMF, a PDU session establishment message to establish a new PDU session, receiving a PDU session establishment response from the target SMF, the response including QoS flows and Qos parameters, and transmitting a PDU session establishment response to the WTRU.

The method may further include, for SSC mode 2, sending a PDU session release command to the WTRU. The method may further include, for SSC mode 3, releasing resources associated with the PDU session ID. The method may include wherein the releasing occurs after an expiration of a timer or a time delay. The method may further include configuring a tunnel with a user plane function (UPF) managed by the target SMF for the new PDU session. The method may include wherein the received PDU session request message is a PDU session release request message and the SSC mode is mode 2. The method may include wherein for SSC mode 2, the PDU session release request message comprises the PDU session ID to be released and tunnel information for the new PDU session. The method may include wherein the received PDU session request message is a PDU session modification request message and the SSC mode is mode 3. The method may include wherein for SSC mode 3, the PDU session modification request message comprises the PDU session ID to be reestablished at a new PDU session anchor and tunnel information for the new PDU session. The method may include wherein the new PDU session is reestablished to replace a PDU session configured with the PDU session ID.

A system, device and method for service and session continuity (SSC) mode handling with session management (SM) context sharing performed in a target session management function (SMF) are disclosed. The method includes receiving a request to support a protocol data unit (PDU) session anchor change for a PDU session, selecting a user plane function (UPF) for the PDU session based on a target service area for a wireless transmit and receive unit (WTRU), assigning a SM context for a new PDU session, sending a response to a first SMF for the new PDU session, receiving a PDU session establishment request from the WTRU for a data network name (DNN) and the SSC mode based on the assigned SM context from the first SMF, assigning QoS flows for the new PDU session based on the assigned SM context from the first SMF, activating the assigned SM context for the new PDU session, and sending a PDU session establishment response message including QoS flows and QoS parameters to a RAN node.

The method may include wherein the received request may include an SM context of the PDU session to be moved including WTRU ID, DNN, SSC mode, and QoS flows information. The method may further include activating a tunnel for the new PDU session. The method may further include sending a response to the first SMF including tunnel information for the new PDU session. The method may include wherein the assigned SM context includes tunnel information. The method may further include for SCC mode 3 activating the assigned SM context for the new PDU session and activate the tunnel using the tunnel information. The method may further include for SCC mode 3 sending a PDU session establishment response message include QoS flows and QoS parameters.

A network node is provided including a transceiver, and a processor operably coupled to the transceiver. The transceiver and processor configured to receive a protocol data unit (PDU) session request message from a session management function (SMF), the PDU session request message including a PDU session identifier (ID) and a target SMF, receive a PDU session establishment request message from a wireless transmit and receive unit (WTRU) for a data network name (DNN)associated with the target SMF information, transmit, to the target SMF, a PDU session establishment message to establish a new PDU session, receive a PDU session establishment response from the target SMF, the response including QoS flows and Qos parameters, and transmit a PDU session establishment response to the WTRU.

The transceiver and processor may be further configured to, for SSC mode 2, send a PDU session release command to the WTRU. The transceiver and processor may be further configured to, for SSC mode 3, release resources associated with the PDU session ID after an expiration of a timer or a time delay.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates a reference model of a potential architecture of 5G or NextGen network;
FIG. 3

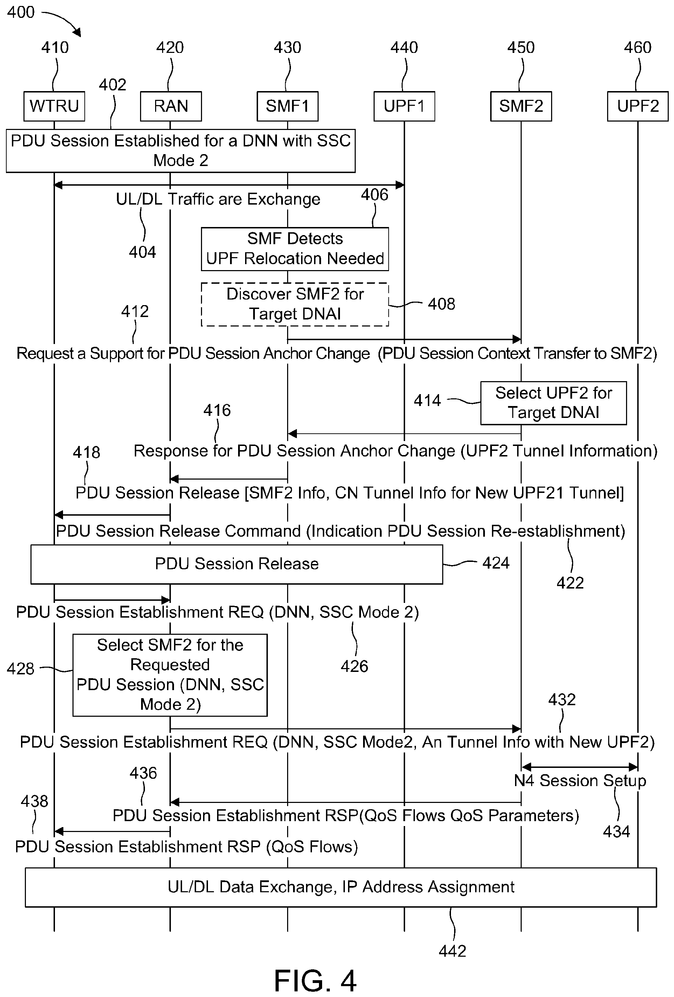

FIG. 4: illustrates a signaling diagram representing a method for SSC mode 2 handling in distributed NAS;

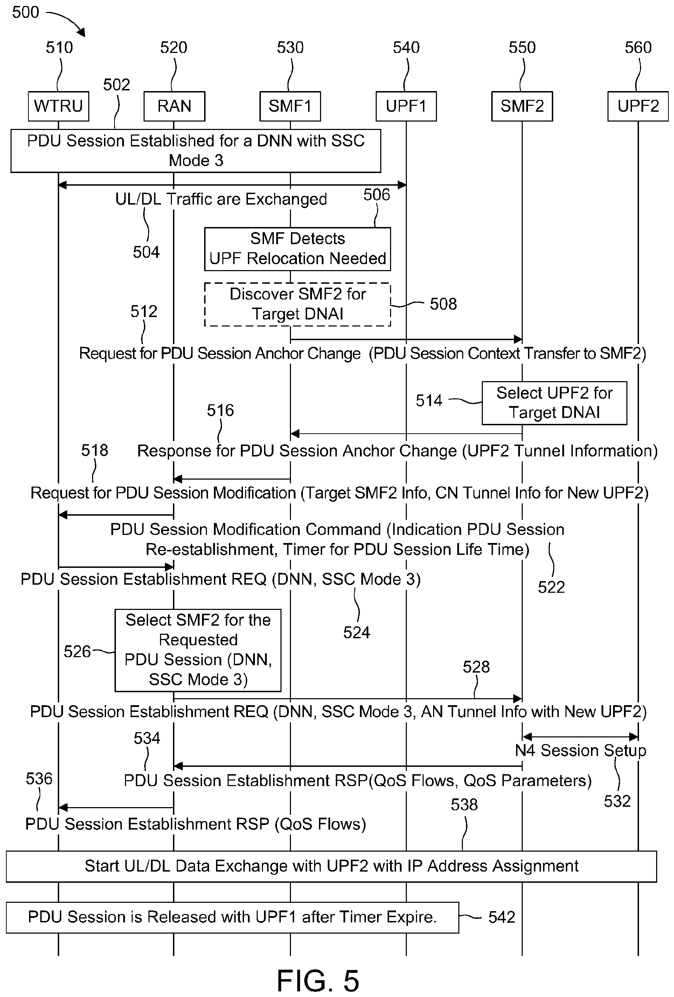

FIG. 5 illustrates a signaling diagram representing a method for SSC mode 3 handling in distributed NAS;

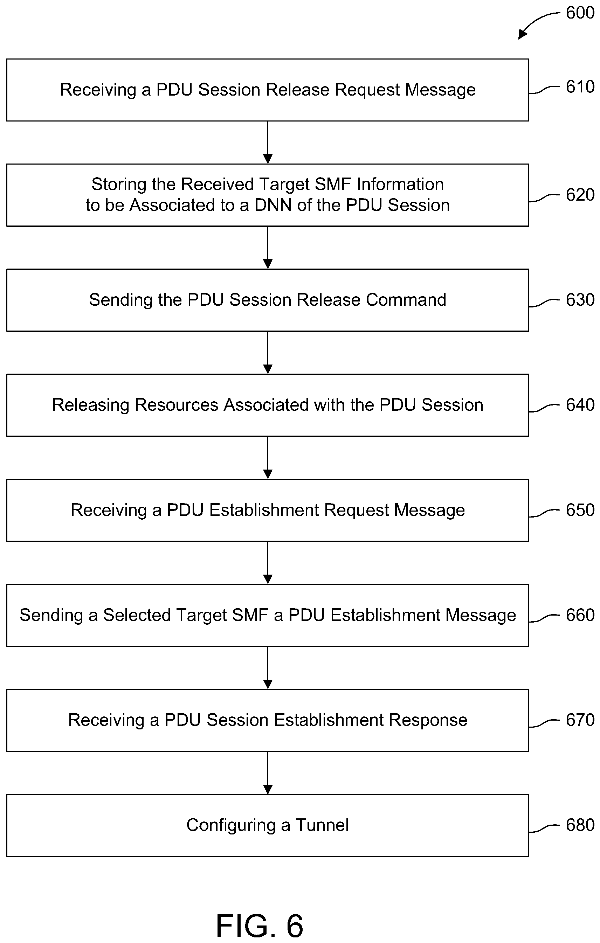

FIG. 6 illustrates a method for SSC mode 2 handling with SM context sharing for a RAN Node;

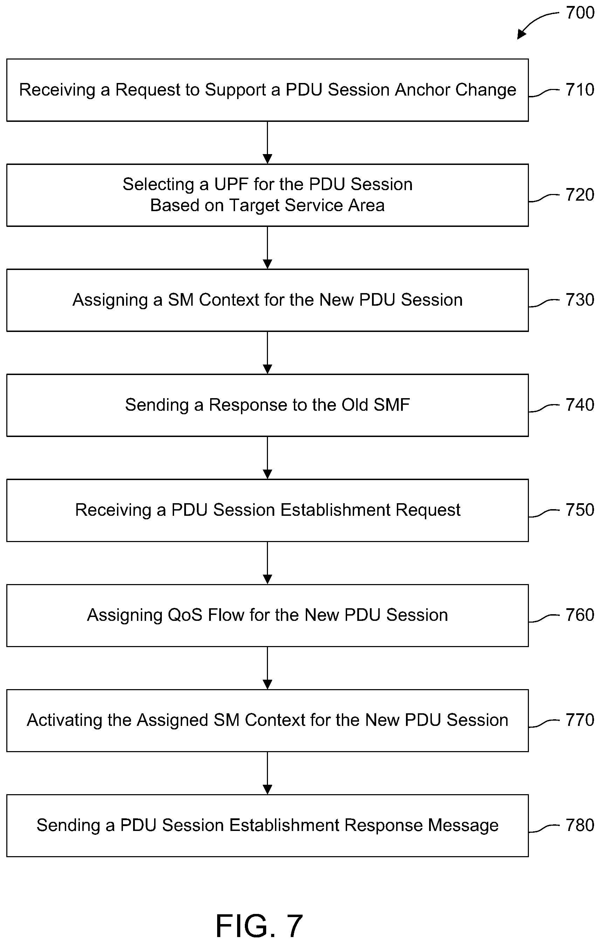

FIG. 7 illustrates a method for SSC mode 2 handling with SM context sharing for a target SMF;

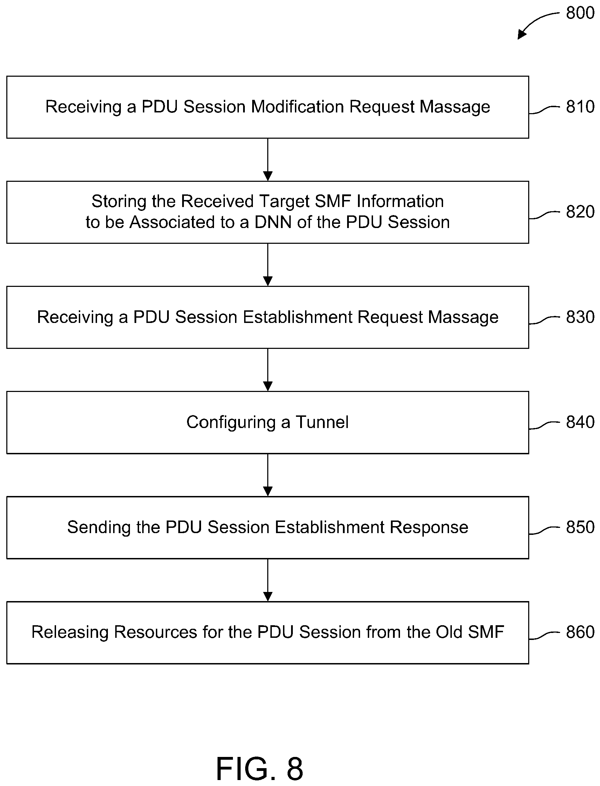

FIG. 8 illustrates a method for SSC mode 3 handling with SM context sharing for a RAN node; and

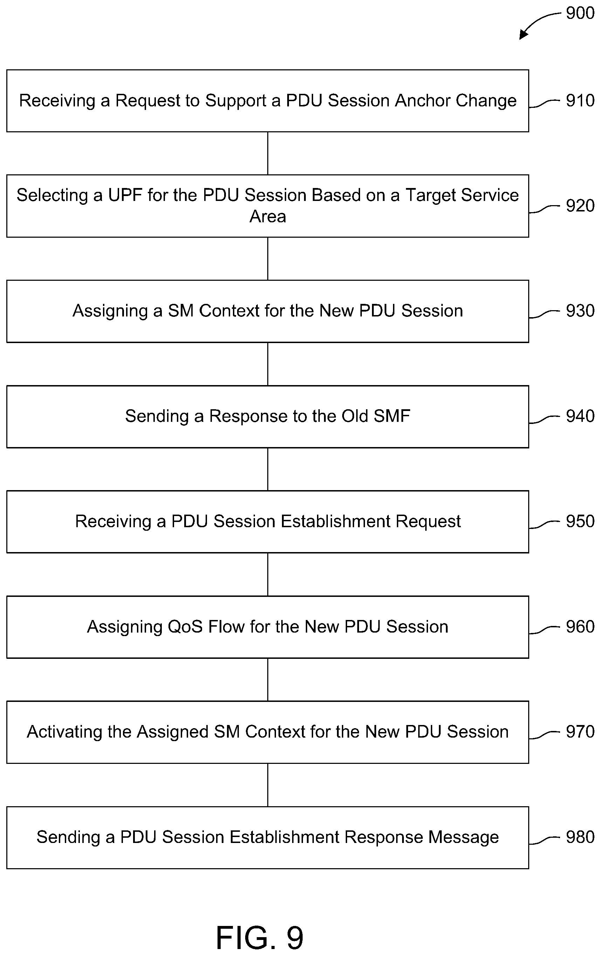

FIG. 9 illustrates a method for SSC mode 3 handling with SM context sharing for a target SMF.

### DETAILED DESCRIPTION

When a Session Management Function (SMF) detects PDU session reestablishment, SMF discover new SMF and exchange session management (SM) context to reduce any procedure for PDU session reestablishment.

A system, device and method for service and session continuity (SSC) mode handling with session management (SM) context sharing performed in a RAN node are disclosed. The method includes receiving a protocol data unit (PDU) session request message from a session management function (SMF), the PDU session request message including a PDU session identification (ID) and information identifying a target SMF, receiving a PDU session establishment request message from a wireless transmit and receive unit (WTRU) for a data network name (DNN) associated with the target SMF information, transmitting, to the target SMF, a PDU session establishment message to establish a new PDU session, receiving a PDU session establishment response from the target SMF, the response including QoS flows and Qos parameters, and transmitting a PDU session establishment response to the WTRU.

The method may further include, for SSC mode 2, sending a PDU session release command to the WTRU. The method may further include, for SSC mode 3, releasing resources associated with the PDU session ID. The method may include wherein the releasing occurs after an expiration of a timer or a time delay. The method may further include configuring a tunnel with a user plane function (UPF) managed by the target SMF for the new PDU session. The method may include wherein the received PDU session request message is a PDU session release request message and the SSC mode is mode 2. The method may include wherein for SSC mode 2, the PDU session release request message comprises the PDU session ID to be released and tunnel information for the new PDU session. The method may include wherein the received PDU session request message is a PDU session modification request message and the SSC mode is mode 3. The method may include wherein for SSC mode 3, the PDU session modification request message comprises the PDU session ID to be reestablished at a new PDU session anchor and tunnel information for the new PDU session. The method may include wherein the new PDU session is reestablished to replace a PDU session configured with the PDU session ID.

A system, device and method for service and session continuity (SSC) mode handling with session management (SM) context sharing performed in a target session management function (SMF) are disclosed. The method includes receiving a request to support a protocol data unit (PDU) session anchor change for a PDU session, selecting a user plane function (UPF) for the PDU session based on a target service area for a wireless transmit and receive unit (WTRU), assigning a SM context for a new PDU session, sending a response to a first SMF for the new PDU session, receiving a PDU session establishment request from the WTRU for a data network name (DNN) and the SSC mode based on the assigned SM context from the first SMF, assigning QoS flows for the new PDU session based on the assigned SM context from the first SMF, activating the assigned SM context for the new PDU session, and sending a PDU session establishment response message including QoS flows and QoS parameters to a RAN node.

The method may include wherein the received request may include an SM context of the PDU session to be moved including WTRU ID, DNN, SSC mode, and QoS flows information. The method may further include activating a tunnel for the new PDU session. The method may further include sending a response to the first SMF including tunnel information for the new PDU session. The method may include wherein the assigned SM context includes tunnel information. The method may further include for SCC mode 3 activating the assigned SM context for the new PDU session and activate the tunnel using the tunnel information. The method may further include for SCC mode 3 sending a PDU session establishment response message include QoS flows and QoS parameters.

A network node is provided including a transceiver, and a processor operably coupled to the transceiver. The transceiver and processor configured to receive a protocol data unit (PDU) session request message from a session management function (SMF), the PDU session request message including a PDU session identification (ID) and a target SMF information, receive a PDU session establishment request message from a wireless transmit and receive unit (WTRU) for a data network name (DNN)associated with the target SMF information, transmit, to the target SMF, a PDU session establishment message to establish a new PDU session, receive a PDU session establishment response from the target SMF, the response including QoS flows and Qos parameters, and transmit a PDU session establishment response to the WTRU.

The transceiver and processor may be further configured to, for SSC mode 2, send a PDU session release command to the WTRU. The transceiver and processor may be further configured to, for SSC mode 3, release resources associated with the PDU session ID after an expiration of a timer or a time delay.

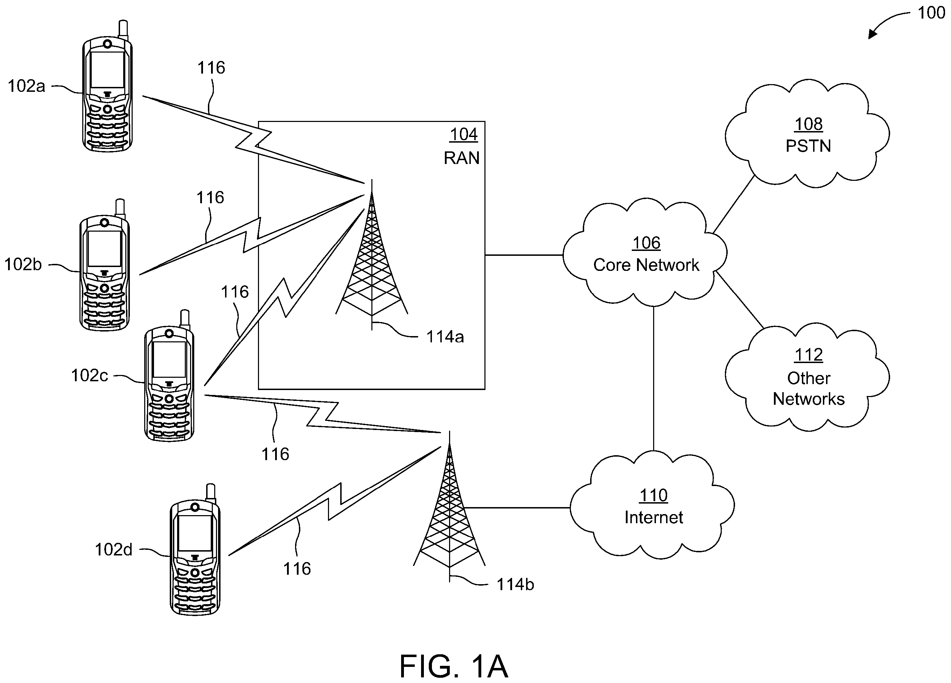

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

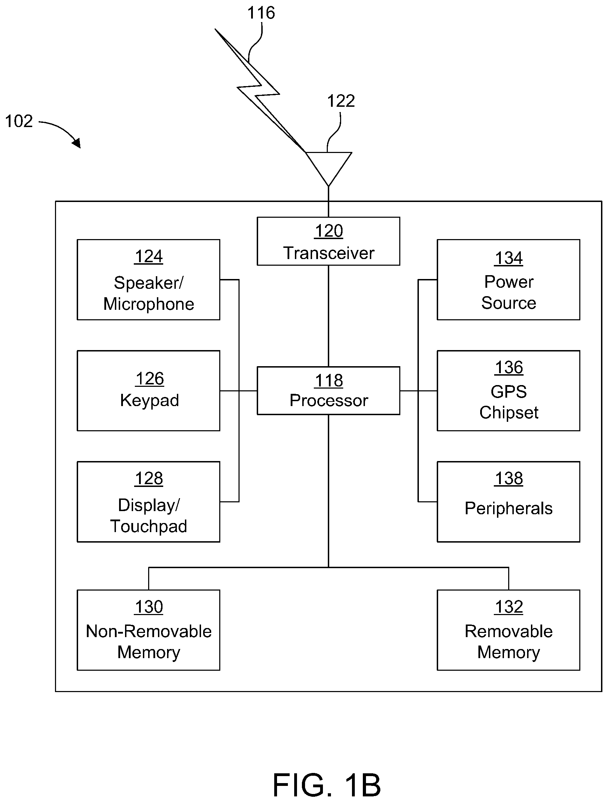

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

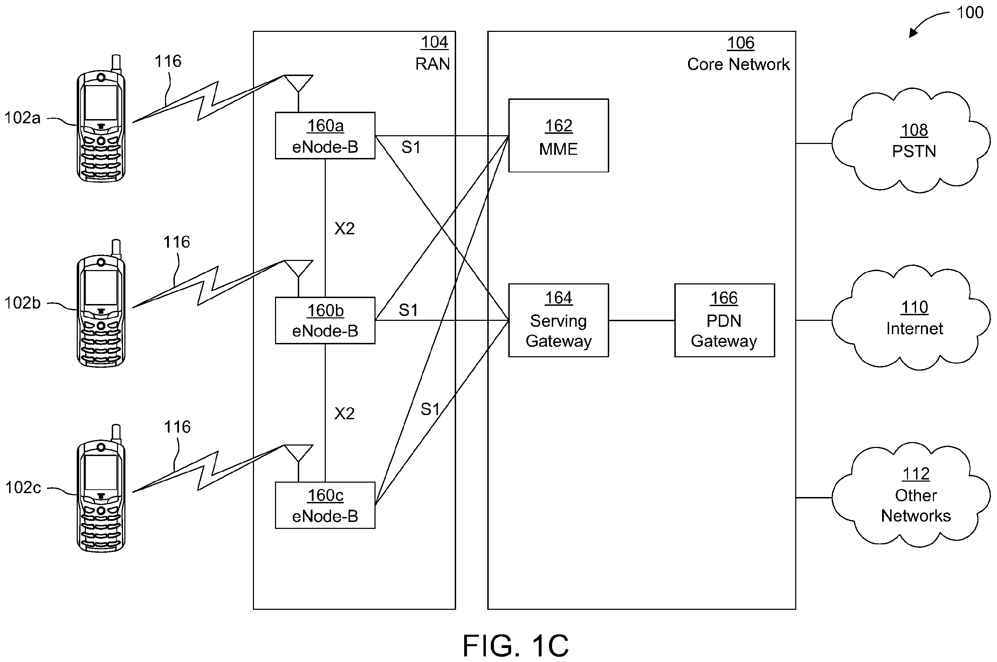

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11 ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.1 1ah is 6 MHz to 26 MHz depending on the country code.

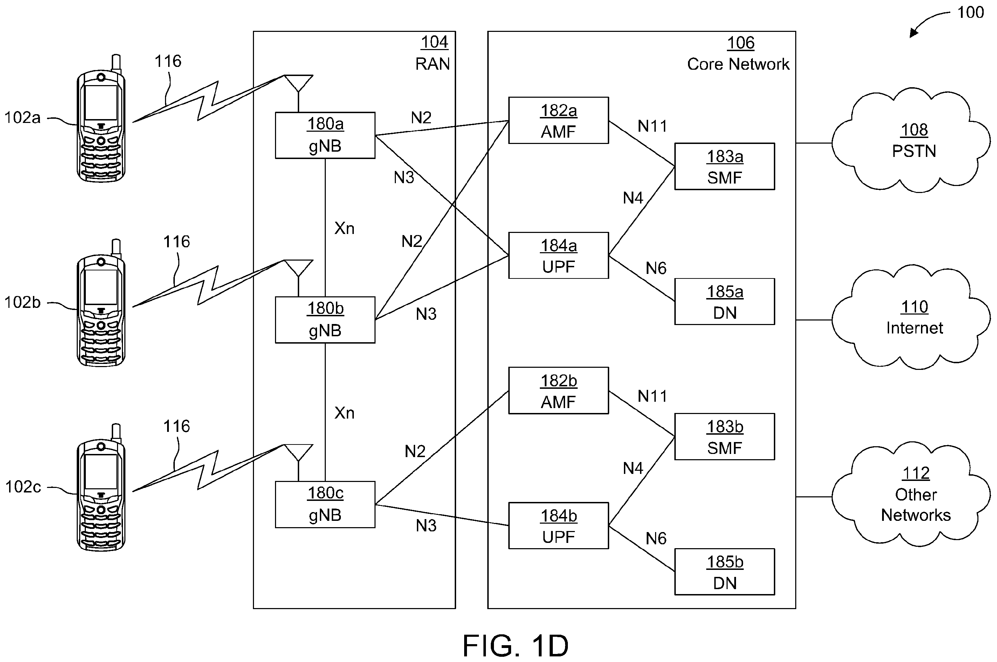

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

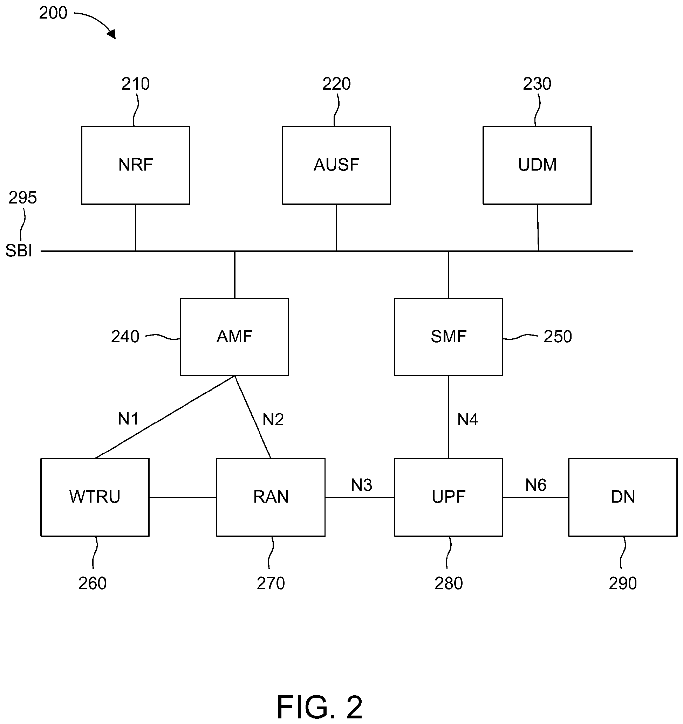

FIG. 2 illustrates a reference model 200 of a potential architecture of 5G or NextGen network. The architecture of model 200 specifies discrete interfaces between control-plane elements. RAN 270 refers to a radio access network based on the 5G RAT or Evolved E-UTRA that connects to the NextGen core network. The Access Control and Mobility Management Function (AMF) 240 at least includes the following functionalities, Registration management, Connection management, Reachability management, Mobility Management, etc. The Session Management Function (SMF) 250 at least includes the following functionalities, session management (including session establishment, modify and release), WTRU IP address allocation, selection and control of UP function, etc. The User plane function (UPF) 280 at least includes the following functionalities, packet routing & forwarding, packet inspection, traffic usage reporting, etc.

Network Repository Function (NRF) 210 may facilitate service discovery and enabling dynamic network function selection. NRF 210 may serve as a repository for information about network services and functions available within the 5G Core network. Network functions and services register their capabilities and addresses with the NRF during the network's initialization or when they come into existence.

Authentication server function (AUSF) 220 validates the identity of a user and providing access to the network resources based on their security level.

Unified data management (UDM) 230 stores and manages the user's data, including their IMSI and authentication data. UDM 230 provides other network function, i.e., AMF 240, SMF 250, for example, with the user's data, e.g., authentication data, when requested.

Data network (DN) 290 is within the system as illustrated, and is described herein.

The NFs (e.g., AMF 240, SMF 250, UDM 230) communicate with each other using service based interface (SBI) 295 (using protocols like HTTP). The goal of the service base architecture (SBA) is to enable NFs to expose services (e.g., using RESTful APIs) to other NFs, for the system to provide the desired functionality.

The other interfaces shown (Nx) in FIG. 2 and described below are different from SBI 295.

WTRU 260 may communicate with AMF 240 over N1 using a NAS protocol. Control plane messaging between WTRU 260 and other NFs (e.g., SMF 250) may use NAS transport encapsulation mechanism provided by AMF 240 for the NFs.

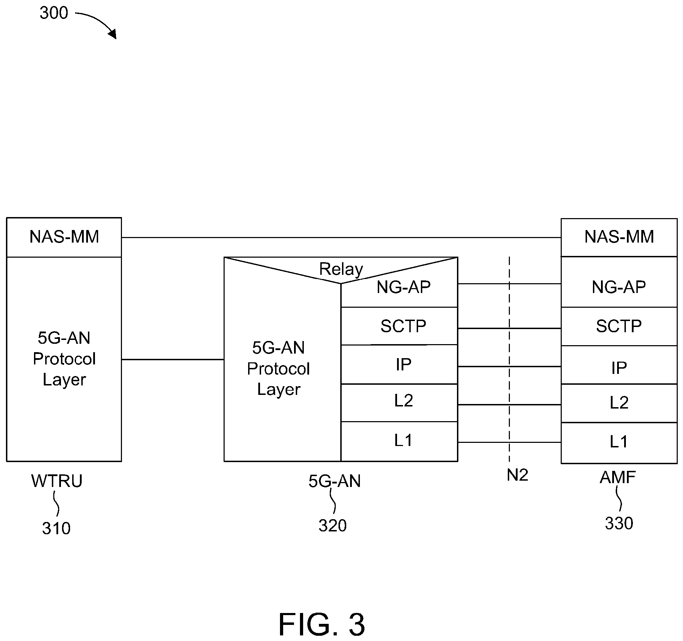

FIG. 3 illustrates a depiction of a control plane stack 300 between the WTRU 310 and the AMF 330. As illustrated in FIG. 3, RAN 320 communicates with the AMF 330 over N2 protocol using an NGAP protocol. Control plane messaging between the WTRU 310 and RAN 320 (Access Stratum (AS)) is done using RRC (top of the 5G-AN Protocol layers) which is used to transport NAS messages received or sent by RAN 320 over N2. Based on the architecture and control plane stack, when the WTRU 310 sends any control plane message for handling by a network function (e.g., SMF), the message is sent to the AMF 330 via RAN 320 using N2 interface and the AMF 330 communicates with a relevant network function (e.g. SMF) via SBI. As illustrated, WTRU 310 may include a NAS-MM and 5G-AN protocol layer. RAN 320, which may be a 5g-AN, for example may include a 5G-AN protocol layer and NG-AP, SCTP, IP, L2 and L1 layers. AMF 330 may include a NAS-MM in communication with the NAS-MM of the WTRU 310, and NG-AP, SCTP, IP, L2, and L1 layers in communication with the respective layer in the RAN 320 stack over N2 interface as described.

5G System architecture supports the service and session continuity (SSC) of IP traffic for the WTRU's application. The SSC mode associated with a PDU session does not change during the lifetime of a PDU Session. There are three modes specified in 5G system referred to as SSC mode 1, SSC mode, and SSC mode 3.

For SSC mode 1, the network preserves the connectivity service provided to the WTRU. For the case of PDU session of IPv4 or IPv6 or IPv4v6 type, the IP address is preserved.

For SSC mode 2, the network may release the connectivity service delivered to the WTRU and release the corresponding PDU Session(s). For the case of IPv4 or IPv6 or IPv4v6 type, the release of the PDU session induces the release of IP address(es) that had been allocated to the WTRU.

For SSC mode 3, changes to the user plane can be visible to the WTRU, while the network ensures that the WTRU suffers no loss of connectivity. A connection through new PDU session anchor point is established before the previous connection is terminated in order to allow for better service continuity. For the case of IPv4 or IPv6 or IPv4v6 type, the IP address is not preserved in this mode when the PDU Session Anchor changes. After the new IP address/prefix has been allocated, the old IP address/prefix is maintained during some time indicated to the WTRU and then released.

When a PDU session establishment is requested, the SMF selects an SSC mode for the PDU session based on the allowed SSC modes in the user subscription as well as the PDU Session type, and if present, the SSC mode requested by the WTRU.

The WTRU may be provisioned with an SSC mode selection policy (SSCMSP) as part of the URSP rule. The WTRU may use the SSCMSP to determine the type of session and service continuity mode associated with an application. If the WTRU does not have SSCMSP, the WTRU may select an SSC mode based on UE Local Configuration (ULC). If the WTRU cannot select an SSC mode, the WTRU may request the PDU Session establishment without indication on the SSC mode. If SMF does not accept the requested SSC mode, the SMF may reject the PDU session establishment request. If SSC mode is not indicated in the PDU session establishment request, the SMF may select the SSC mode.

The next generation network architecture is expected to continue and push further the shift started in 5G to embrace a cloud native implementation in the core network. The push to bring core network user plane and other functions always closer to the edge may continue to be motivated by the need to support ever increasing traffic levels and lower latencies (e.g., XR, meta-verse, AIML). With this major trend the possibility to extend SBA to the RAN emerges to simplify the network architecture while taking advantage of cloud native and micro-services architectures capabilities (e.g., scalability, elasticity, open interfaces). For example, the possibility to extend the SBI framework beyond the 5GC NFs (as shown in FIG. 1) exists. For example, a WTRU may use an evolved NAS mechanism to exchange NAS messages directly with one or more NFs. As an example, an SBI compliant WTRU may establish an application layer communication directly with an NF (e.g., SMF) without going through AMF, instead of via N1, for example.

In another example, the next generation network may include "connected intelligence" where intelligent networks using AIML technology to be able to connect a multitude of "intelligent" things. With a large volume of data collection from a multitude of devices (e.g., sensors, Ambient IoT) and with the added high flexibility and adaptability of AIML enabled functionalities, the system may provide for new advanced applications such as XR/Metaverse.

The non-access stratum (NAS) protocol refers to a layer of communication protocols used between the WTRU and the access and mobility management function (AMF) located in the core network (CN) in the 5G core. The NAS protocol operates above the access stratum (AS) and plays a key role in managing signaling for mobility and session management. Different mobile network functions are based on the NAS protocol. Examples of mobile network functions based on the NAS protocol are described below.

A first function based on the NAS protocol is mobility management (MM). The NAS protocol enables the ability to manage location updates as the WTRU moves between tracking areas (TAs) and includes procedures like initial registration, deregistration, and connection management.

A second function based on the NAS protocol is session management (SM). The NAS protocol enables the ability to establish, modify, and release protocol data unit (PDU) sessions for data transmission and support quality of service (QoS) management for applications.

A third function based on the NAS protocol is security management. The NAS protocol enables the ability to provide mutual authentication between the WTRU and the core network (CN) and facilitate encryption and integrity protection for NAS messages.

A fourth function based on the NAS protocol is paging coordination. The NAS protocol enables the ability to re-establish communications with the WTRU when in idle mode.

A fifth function based on the NAS protocol is support for 5G system features. The NAS protocol enables the ability to slice support, allowing the WTRU to connect to specific network slices based on service requirements, and enables managing dual connectivity and mobility across heterogeneous networks.

As will be appreciated, in 5G systems, the NAS protocol does not offer support for data collection and data collection session triggering or management.

The NAS protocol ensures efficient and secure communication between the WTRU and the 5GC by supporting features and functions expected in 5G networks. Examples of supported functions include secure and encrypted communications, mobility support, session management, scalability (e.g., large number of devices), QoS differentiation, and other functions understood by those possessing skill in the art.

The NAS protocol may be extended to the beyond 5G networks, such as including 6G mobile wireless systems, with some modifications and enhancements on the WTRU side as well as on the 6G core network side.

The 5GC supports a PDU connectivity service, such as a service that provides exchange of PDUs between a WTRU and a data network identified by a data network name (DNN). The PDU connectivity service is supported via PDU sessions that are established upon request from the WTRU between the WTRU and 5GC. PDU sessions may be established (upon WTRU request), modified (upon WTRU and 5GC request) and released (upon WTRU and 5GC request) using NAS SM signaling exchanged over N1 between the WTRU and the SMF.

In the 5G environment, after a PDU session is established with an SMF, any mobility event that may impact the PDU Session is managed by AMF. This means that after the SMF detects that current PDU session anchor (i.e., UPF) cannot serve the WTRU, SMF needs to inform AMF that the WTRU needs to change its PDU session anchor with the target DNAI information which is used by AMF for the selection of the SMF which can control the new PDU session anchor i.e., UPF. As the AMF is managed as a sole contacting point for NAS connection between a WTRU and a core network and for N2 interface between a RAN node and a core network, the AMF may become the bottleneck point in 5G system. As the AMF manages the mobility related aspects of the PDU session, this inter-dependency adds complexity and latency to PDU session management procedures during session continuity (e.g., to minimize session break time). Current 5G NAS scheme concentrates the signaling towards AMF, which increases the risk of NAS congestion at AMF.

In order to resolve the limitations that stem from the AMF centric 5G system architecture, a more distributed NAS approach may be considered to allow direct communication paths (e.g., direct connection between a RAN node and a core network function, direct NAS connection between a WTRU and a core network function). For different SSC modes, different PDU session handling is needed. For example, for SSC mode 1, per service area of the SMF, a I-SMF may needs to be added. For SSC mode 2, after PDU session release, a new PDU session may be established. For SSC mode 3, a new PDU session anchor is selected for the existing PDU session. Considering a system evolution towards a more distributed NAS environment, where the SMF may need to operate independently from the AMF, the handling of mobility events relevant for session management becomes important without AMF involvement. In order to provide increased session management to lessen or eliminate the AMF involvements, enhancements to session management (e.g., SMF), including session and service continuity, in a distributed NAS environment (e.g., minimize any session break time) are provided.

FIG. 4: illustrates a signaling diagram representing a method 400 for SSC mode 2 handling in distributed NAS. Method 400 operates with a WTRU 410 functionally similar to WTRU 260 of FIG. 2, for example. Method 400 operates with a RAN 420 in communication with WTRU 410. RAN 420 may be functionally similar to RAN 270 of FIG. 2, for example. Method 400 operates with SMF1 430 and SMF2 450 in communication with the other elements of FIG. 4 as described in the signaling defined below. SMF1 430 and SMF2 450 may be functionally similar to SMF 250 of FIG. 2. Method 400 operates with UPF1 440 and UPF2 460 in communication with the other elements of FIG. 4 as described in the signaling defined below. UPF1 440 and UPF2 460 may be functionally similar to UPF 280 of FIG. 2.

At 402, method 400 includes WTRU 410 establishing a PDU session for a DNN with SSC mode 2. The PDU session is managed by SMF1 430 and UPF1 440 works as PDU session anchor for the PDU session. In an example, the PDU session is represented by PDU session ID_1.

At 404, method 400 includes, using the PDU session, WTRU 410 sending and receiving an uplink and downlink traffic.

At 406, method 400 includes SMF1 430 detecting UPF relocation is needed for the PDU session ID_1. This may include because UPF1 440 cannot serve the PDU session for WTRU's 410 application at the area which WTRU 410 enters, UPF1 440 cannot connect to WTRU's 410 new serving RAN node 420, detecting WTRU 410 moves out of SMF1's 430 service area, or due to load balancing, failure or optimization the network may initiate session move.

At 408, method 400 includes, if SMF1 430 cannot control the UPF at the target service area (e.g., per WTRU's 410 location, per WTRU's 410 service area), SMF1 430 discovering the new SMF (SMF2 450) serving the target area (e.g., using target data network access ID (DNAID), or using SMF's service area). SMF1 430 discovers SMF2 450 using an NRF. SMF1 430 provides the parameters to be matched by NRF such as S-NSSAI, DNN, and target DNAI. When SMF can control the UPF at the target service area, 408 may be skipped and 412, 414, and 416 may be performed internally by SMF1 430.

At 412, method 400 includes, after discovering new SMF serving the target area1, such as SMF2 450, SMF1 430 sending a request to support a PDU session for PDU session anchor change. In the request, SMF1 430 may include PDU session context of PDU session ID_1. The PDU session context may include WTRU 410's ID, requested service area (e.g., target DNAI), WTRU's 410 serving RAN node 420's information, WTRU's 410 location, DNN, SSC mode of the PDU session, such as SSC mode 2, QoS flows of PDU session_ID_1, application IDs which is served by PDU session_ID_1.

At 414, method 400 includes. based on the PDU session context received at 412, SMF2 450 selecting a UPF2 460 which may serve the corresponding PDU session of WTRU 410. SMF2 450 and/or UPF2 460 may pre-assign any context/resource for the future PDU session which will be set up to serve WTRU 410 via its serving RAN node 420. The pre-assigned context for the future PDU session may include CN tunnel information for N3 tunnel between UPF2 460 and WTRU's 410 serving RAN node 420, packet detection rule, forwarding action rules, and other context understood in the art.

At 416, method 400 includes SMF2 450 sending a response to the request received at 412. The response may include UPF2's 460 CN tunnel information. If the request at 412 cannot be accepted (e.g., because of overload, etc.), the request may be rejected with a reason value (overload, etc.).

At 418, method 400 includes SMF1 430 sending a signaling message to RAN node 420 which indicates PDU session of WTRU 410 is to be released and reestablished (e.g., the indication may be included as the cause value). The signaling message may include PDU session ID, such as PDU session ID_1, and its associated information such as DNN, SSC mode, such as SSC mode 2, for example. When serving SMF needs to be changed, such as from SMF1 430 to SMF2 450, SMF1 430 may inform RAN node 420 of the target SMF information for WTRU's 410 new PDU session, which may be established after PDU session of PDU session ID_1 is released. SMF1 430 may provide information about the CN tunnel information for the new PDU session which is managed by target SMF.

RAN node 420 may associate the target SMF information with the DNN of PDU session ID_1 and when RAN node 420 receives a PDU session establishment request for the DNN, RAN node 420 may select the target SMF for forwarding the received PDU session establishment request. When SMF1 430 can control the new UPF, RAN node 420 is informed of information and the SMF information may remain the same

At 422, method 400 includes RAN node 420 sending PDU session release command to WTRU 410. The PDU session release command may include PDU session ID_1 and indication of PDU session reestablishment.

At 424, method 400 includes, after receiving PDU session release command, WTRU 410 releasing the PDU session of PDU session ID_1.

At 426, method 400 includes WTRU 410 sending a PDU session establishment request which may include DNN, SSC mode 2.

At 428, method 400 includes, after receiving a PDU session establishment request from WTRU 410 for the requested DNN, RAN node 420 selecting SMF2 450 as received at 418. As an example, RAN node 420 may select SMF2 450 for any PDU session establishment request with the requested DNN which served by SMF2 450 once it receives SMF2 450 information with the associated DNN at 418. As an example, in the PDU session establishment request from WTRU 410, WTRU 410 may include an indication saying that this PDU session establishment is for PDU session reallocation or it may include PDU session ID_1 as its associated PDU session information. Based on the indication and/or PDU session ID_1, RAN node 420 may acknowledge the PDU session establishment request is for PDU session reallocation and select SMF2 450 as received at 418.

As an example, based on the indication of PDU session release and reestablishment associated to WTRU 410 received at 418, when receiving a PDU session establishment request from WTRU 410, after 422, RAN node 420 may consider the PDU session establishment request for the requested DNN is associated to the PDU session reestablishment indication and the RAN node 420 may select the SMF2 450. Once RAN node 420 acknowledge the PDU session establishment request is for PDU session reallocation, RAN node 420 may use the CN tunnel info received at 418 for the N3 tunnel of the requested PDU session.

As an example, RAN node 420 may check SSC mode in the PDU session establishment request. If the requested SSC mode is the same as the value associated to the PDU session ID_1, such as SSC mode 2, RAN node 420 may determine that the PDU session establishment request is associated to the PDU session reestablishment request at 422 and RAN node 420 may use the CN tunnel info received at 418 for the N3 tunnel of the requested PDU session.

At 432, method 400 includes RAN node 420 sending a PDU session establishment request to SMF2 450. In the PDU session request, RAN node 420 may include AN tunnel information for the corresponding N3 tunnel.

At 434, method 400 includes, after receiving a PDU session establishment from RAN node 420 for WTRU 410, SMF2 450 communicating with UPF2 460 for setting up N4 session for the PDU session and SMF2 450 may provide the received AN tunnel information to UPF2 460 for setting up corresponding N3 tunnel. If SMF2 450 and/or UPF2 460 preassigned the context and resource for the requested PDU session of WTRU 410 for DNN, SSC mode 2 at 414, SMF2 450 and/or UPF2 460 may activate the preassigned context and resources.

At 436, method 400 includes SMF2 450 sending a PDU session establishment response to RAN node 420. In the message, SMF2 450 may include assigned QoS flows and QoS parameters. SMF2 450 may determine the assigned QoS flows and QoS parameters based on the SM context information shared by SMF1 430 at 412.

At 438, method 400 includes RAN node 420 sending a PDU session establishment response to WTRU 410 which include assigned QoS flows information.

At 442, method 400 includes WTRU 410 sending and receiving UL and DL data using the assigned PDU session. WTRU 410 may be assigned a new IP address for the PDU session.

In an example, SMF1 430 may bind information about SMF2 450 with WTRU 410 and the PDU Session with SSC mode 2, using a UE Context Function (UCF). For example, after acceptance of PDU Session anchor change at 416, SMF1 430 may store current PDU Session ID and SMF2 450 information in the UCF. At 428, RAN locates information about SMF2 450 using UCF, where UCF is located by RAN using WTRU 410 (temporary) ID in the request at 426.

FIG. 5 illustrates a signaling diagram representing a method 500 for SSC mode 3 handling in distributed NAS. Method 500 operates with a WTRU 110 functionally similar to WTRU 260 of FIG. 2, for example. Method 500 operates with a RAN 520 in communication with WTRU 410. RAN 520 may be functionally similar to RAN 270 of FIG. 2, for example. Method 500 operates with SMF1 530 and SMF2 550 in communication with the other elements of FIG. 4 as described in the signaling defined below. SMF1 530 and SMF2 550 may be functionally similar to SMF 250 of FIG. 2. Method 500 operates with UPF1 540 and UPF2 560 in communication with the other elements of FIG. 4 as described in the signaling defined below. UPF1 540 and UPF2 560 may be functionally similar to UPF 280 of FIG. 2.

At 502, method 500 includes a WTRU 510 establishing a PDU session for a DNN with SSC mode 3. The PDU session is managed by SMF1 530 and UPF1 540 operating as PDU session anchor for the PDU session. In an example, the PDU session may be represented by PDU session ID_1.

At 504, method 500 includes using the PDU session to exchange traffic in UL and DL fashion. In an example, WTRU 510 sends and receives one or more uplink and downlink traffic.

At 506, method 500 includes SMF1 530 detecting UPF relocation is needed for the PDU session ID_1. For example, if UPF1 540 cannot serve the PDU session for WTRU's 510 application at the area which WTRU 510 enters, UPF1 540 cannot connect to WTRU's 510 new serving RAN node 520, detecting WTRU 510 moves out of SMF1's 530 service area, or due to load balancing, failure or optimization the network may initiate session move.

At 508, method 500 includes, if SMF1 530 cannot control the UPF at the target service area, such as for WTRU's 510 location or WTRU's 510 service area, SMF1 530 may discover a new SMF (SMF2 550) serving the target area, such as using target data network access ID (DNAI), or using SMF2 550 service area. SMF1 530 may discover SMF2 550 using an NRF. SMF1 530 may provide the parameters to be matched by the NRF such as S-NSSAI, DNN, and target DNAI, for example. When SMF1 530 can control the UPF at the target service area, 508 may be skipped and 512, 514, and 516 may be performed internally by SMF1 530.

At 512, method 500 includes, after discovering SMF2 550 serving the target area1, SMF1 530 may send a request to support a PDU session for PDU session anchor change. In the request, SMF1 530 may include PDU session context of PDU session ID_1. The PDU session context may include WTRU 510's ID, requested service area (e.g., target DNAI), WTRU's 510 serving RAN node's 520 information, WTRU's 510 location, DNN, SSC mode of the PDU session (here, SSC mode 2), QoS flows of PDU session_ID_1, application IDs which is served by PDU session_ID_1.

At 514, method 500 includes, based on the PDU session context received at 512, SMF2 550 may select a UPF2 560 which may serve the corresponding PDU session of WTRU 510. SMF2 550 and/or UPF2 560 may pre-assign any context/resource for the future PDU session which will be setup to serve WTRU 510 via its serving RAN node 520. The pre-assigned context for the future PDU session may include CN tunnel information for N3 tunnel between UPF2 560 and WTRU's 510 serving RAN node 520, packet detection rule, forwarding action rule, and other contexts as would be understood to those in the art.

At 516, method 500 includes SMF2 550 sending a response to the request received at 512. The response may include UPF2's 560 CN tunnel information. If the request at 512 cannot be accepted (e.g., because of overload, etc.), the request may be rejected with reason value (overload, etc.).

At 518, method 500 includes SMF1 530 sending a signaling message to RAN node 520 which indicates the PDU session of WTRU 510 is to be released and reestablished (e.g., the indication may be included as the cause value), along with the timer value after which the PDU session is released. The signaling message may include PDU session ID (here, PDU session ID_1), and its associated information such as DNN, SSC mode (here, SSC mode 3), etc. When the serving SMF needs to be changed (here from SMF1 530 to SMF2 550), SMF1 530 may inform RAN node 520 of target SMF information for WTRU's 510 new PDU session, which is to be established to replace the PDU session of PDU session ID_1. SMF1 530 may provide information about the CN tunnel information for the new PDU session which is managed by target SMF(such as, SMF2 550). RAN node 520 may associate the target SMF information with the DNN of PDU session ID_1 and when the RAN node 520 receives a PDU session establishment request for the DNN, RAN node 520 may select the target SMF for forwarding the received PDU session establishment request. When SMF1 530 can control the new UPF, RAN node 520 is informed of this, and SMF information remains the same.

At 522, method 500 includes RAN node 520 sending PDU session modification command to WTRU 510. The PDU session modification command may include PDU session ID_1, indication of PDU session reestablishment, and the timer value.

At 524, method 500 includes WTRU 510 sending a PDU session establishment request, which includes DNN, SSC mode 3. The PDU session establishment request may include a new PDU session ID.(here PDU session ID_2). In an example, the PDU session ID for the requested PDU session establishment may be assigned by the SMF at 534 described below. The SMF may be for a PDU session for reallocation, for example.

At 526, method 500 includes, after receiving a PDU session establishment request for PDU session ID_2 from WTRU 510 for the requested DNN, RAN node 520 selecting SMF2 550 as received at 518. In an example, RAN node 520 may select SMF2 550 for any PDU session establishment request with the requested DNN which served by SMF2 550 once it receives SMF2 550 information with the associated DNN at 518.

In an example, in the PDU session establishment request from WTRU 510, WTRU 510 may include an indication indicating that this PDU session establishment is for PDU session reallocation or WTRU 510 may include PDU session ID_1 as its associated PDU session information. Based on the indication and/or PDU session ID_1, RAN node 520 may acknowledge the PDU session establishment request is for PDU session reallocation and select the SMF2 550 as received at 518.

In an example, based on the indication of PDU session release and reestablishment associated to WTRU 510 received at 518, when receiving a PDU session establishment request from WTRU 510, after 520, RAN node 520 may consider the PDU session establishment request for the requested DNN to be associated to the PDU session reestablishment indication and RAN node 520 may select SMF2 550. Once RAN node 520 identifies the PDU session establishment request is for PDU session reallocation, RAN node 520 may use the CN tunnel info received at 518 for the N3 tunnel of the requested PDU session reestablishment.

In an example, RAN 520 node may check SSC mode in the PDU session establishment request of PDU session ID_2. If the requested SSC mode is the same as the value associated to the PDU session ID_1 (i.e., SSC mode 3), RAN 520 may consider the PDU session establishment request is associated to the PDU session reestablishment request at 522 and RAN node 520 may use the CN tunnel info received at 518 for the N3 tunnel of the requested PDU session.

At 528, method 500 includes RAN node 520 sending a PDU session establishment request to SMF2 550. In the PDU session request, RAN node 520 may include AN tunnel information for the corresponding N3 tunnel. In an alternative, after receiving the PDU session establishment request, SMF2 550 may retrieve the SM context from SMF1 530 to verify QoS flows which should be assigned to the requested PDU sessions.

At 532, method 500 includes, after receiving a PDU session establishment from RAN node 520 for WTRU 510, SMF2 550 communicating with UPF2 560 for setting up N4 session for the PDU session and SMF2 550 may provide the received AN tunnel information to UPF2 560 for setting up corresponding N3 tunnel setup. If SMF2 550 and/or UPF2 560 preassigned the context and resource for the requested PDU session of WTRU 510 for DNN, SSC mode 3 at 514, SMF2 550 and/or UPF2 560 may activate the preassigned context and resources.

At 534, method 500 includes SMF2 550 sending a PDU session establishment response to RAN node 520. In the message, SMF2 550 may include the assigned QoS flows and QoS parameters. SMF2 550 may determine the assigned QoS flows and QoS parameters based on the SM context information shared by SMF1 530 at 512, for example.

At 536, method 500 includes RAN node 520 sending a PDU session establishment response to WTRU 510. The PDU session establishment response may include the assigned QoS flows information.

At 538, method 500 includes WTRU 510 sending and receiving UL and DL data using the assigned PDU session. WTRU 510 may be assigned a new IP address for the PDU session.

At 542, method 500 includes, after a timer expires, WTRU 510 releasing PDU session of PDU session ID_1.

In an example, SMF1 530 may bind information about SMF2 550 with WTRU 510 and the PDU Session with SSC mode 2, using a WTRU 510 Context Function (UCF). For example, after acceptance of PDU Session anchor change at 516, SMF1 530 may store current PDU Session ID and SMF2 550 information in the UCF. At 526, RAN 520 may locate information about SMF2 550 using UCF, where UCF is located by RAN 520 using WTRU 510 (temporary) ID in the request at 524.

FIG. 6 illustrates a method 600 for SSC mode 2 handling with SM context sharing for a RAN Node. Method 600 includes at 610, receiving a PDU session release request message from an SMF. The PDU session release request message may include the PDU session ID to be released, target SMF information and CN tunnel information for the target PDU session which is designated to be reestablished after the PDU session is released. Method 600 includes at 620, storing the received target SMF information to be associated to a DNN of the PDU session represented by PDU session ID. At 630, method 600 includes sending the PDU session release command from the SMF to the WTRU. At 640, message 600 includes releasing resources associated with the PDU session ID. At 650, method 600 includes receiving a PDU session establishment request message from the WTRU for the DNN, select the target SMF to send the received PDU session establishment request message. At 660, method 600 includes sending the selected target SMF a PDU session establishment message which includes AN Tunnel information to be used for N3 tunnel with new UPF2. At 670, method 600 includes receiving a PDU session establishment Response with QoS flows and QoS parameters. At 680, method 600 includes setting up a N3 tunnel using the received CN Tunnel info for the new PDU session. At 690, method 600 includes sending the PDU session establishment Response from the target SMF to the WTRU.

FIG. 7 illustrates a method 700 for SSC mode 2 handling with SM context sharing for a target SMF. Method 700 includes, at 710, receiving a request to support a PDU session anchor change. The received request may include an SM context of the PDU session to be moved which include WTRU ID, DNN, SSC mode, and QoS flows information. At 720, method 700 includes selecting a UPF for the PDU session based on target service area for the WTRU. At 730, method 700 includes assigning a SM context for the new PDU session which include CN tunnel information. At 740, method 700 includes sending a response to the old SMF which include CN tunnel information for the new PDU session. At 750, method 700 includes receiving a PDU session establishment request from the WTRU for the DNN and the SSC mode as same as the received SM context from the old SMF, and AN tunnel information. At 760, method 700 includes assigning QoS flows for the new PDU session based on the received SM context from old SMF. At 770, method 700 includes activating the preassigned SM context for the new PDU session and activating N3 tunnel using the received AN tunnel information. At 780, method 700 includes sending a PDU session establishment response message include QoS flows and QoS parameters.

FIG. 8 illustrates a method 800 for SSC mode 3 handling with SM context sharing for a RAN node. Method 800 includes, at 810, receiving a PDU session modification request message from SMF. The PDU session modification request message may include the PDU session ID to be reestablished at a new PDU session anchor, and target SMF information and CN tunnel information for the target PDU session which will be reestablished to replace the PDU session of PDU session ID. At 820, method 800 includes storing the received target SMF information to be associated to a DNN of the PDU session represented by PDU session ID. At 830, method 800 includes receiving a PDU session establishment request message from the WTRU for the DNN, select the target SMF to send the received PDU session establishment request message. At 840, method 800 includes sending the selected target SMF a PDU session establishment message. The PDU session establishment message may include AN tunnel information to be used for N3 tunnel with new UPF2. At 850, method 800 includes receiving a PDU session establishment response with QoS flows and QoS parameters. At 860, method 800 includes setting up a N3 tunnel using the received CN Tunnel info for the new PDU session. At 870, method 800 includes sending a PDU session establishment Response to the WTRU. At 880, method 800 includes releasing resources for the PDU session of PDU session ID from old SMF. The releasing may occur, for example after the expiration of a timer or a time delay, for example.

FIG. 9 illustrates a method 900 for SSC mode 3 handling with SM context sharing for a target SMF. At 910, method 900 includes receiving a request to support a PDU session anchor change which include SM context of the PDU session to be moved which include UE ID, DNN, SSC mode, and QoS flows information. At 920, method 900 includes selecting a UPF for the PDU session based on target service area for the WTRU. At 930, method 900 includes assigning a SM context for the new PDU session which include CN tunnel information. At 940, method 900 includes sending a response to the old SMF which include CN tunnel information for the new PDU session. At 950, method 900 includes receiving a PDU session establishment request from the WTRU for the DNN and the SSC mode as same as the received SM context from the old SMF, and AN tunnel information. At 960, method 900 includes assigning QoS flows for the new PDU session based on the received SM context from old SMF. At 970, method 900 includes activating the preassigned SM context for the new PDU session and activate N3 tunnel using the received AN tunnel information. At 9870, method 900 includes sending a PDU session establishment response message include QoS flows and QoS parameters.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for service and session continuity (SSC) mode handling with session management (SM) context sharing performed in a RAN node, the method comprising:
receiving a protocol data unit (PDU) session request message from a session management function (SMF), the PDU session request message including a PDU session identifier (ID) and information identifying a target SMF;
receiving a PDU session establishment request message from a wireless transmit and receive unit (WTRU) for a data network name (DNN) associated with the target SMF;
transmitting, to the target SMF, a PDU session establishment message to establish a new PDU session;
receiving a PDU session establishment response from the target SMF, the response including quality of service (QoS) flows and QoS parameters; and
transmitting a PDU session establishment response to the WTRU.

2. The method of claim 1, further comprising, for SSC mode 2, sending a PDU session release command to the WTRU.

3. The method of claim 1, further comprising, for SSC mode 3, releasing resources associated with the PDU session ID.

4. The method of claim 3, wherein the releasing occurs after an expiration of a timer or a time delay.

5. The method of claim 1, further comprising configuring a tunnel with a user plane function (UPF) managed by the target SMF for the new PDU session.

6. The method of claim 1, wherein the received PDU session request message is a PDU session release request message and the SSC mode is mode 2.

7. The method of claim 6, wherein for SSC mode 2, the PDU session release request message comprises the PDU session ID to be released and tunnel information for the new PDU session.

8. The method of claim 1, wherein the received PDU session request message is a PDU session modification request message and the SSC mode is mode 3.

9. The method of claim 8, wherein for SSC mode 3, the PDU session modification request message comprises the PDU session ID to be reestablished at a new PDU session anchor and tunnel information for the new PDU session.

10. The method of claim 9, wherein the new PDU session is reestablished to replace a PDU session configured with the PDU session ID.

11. A network node for service and session continuity (SSC) mode handling with session management (SM) context sharing, the network node comprising:
a transceiver; and
a processor operably coupled to the transceiver, the transceiver and processor configured to:
receive a protocol data unit (PDU) session request message from a session management function (SMF), the PDU session request message including a PDU session identifier (ID) and a target SMF information;
receive a PDU session establishment request message from a wireless transmit and receive unit (WTRU) for a data network name (DNN)associated with the target SMF;
transmit, to the target SMF, a PDU session establishment message to establish a new PDU session;
receive a PDU session establishment response from the target SMF, the response including quality of service (QoS) flows and QoS parameters; and
transmit a PDU session establishment response to the WTRU.

12. The network node of claim 11, wherein the transceiver and processor are further configured to, for SSC mode 2, send a PDU session release command to the WTRU.

13. The network node of claim 11, wherein the transceiver and processor are further configured to, for SSC mode 3, release resources associated with the PDU session ID after an expiration of a timer or a time delay.

14. The network node of claim 11, wherein the received PDU session request message is a PDU session release request message and the SSC mode is mode 2, and wherein the PDU session release request message comprises the PDU session ID to be released and tunnel information for the new PDU session.

15. The network node of claim 11, wherein the received PDU session request message is a PDU session modification request message and the SSC mode is mode 3, wherein the PDU session modification request message comprises the PDU session ID to be reestablished at a new PDU session anchor and tunnel information for the new PDU session.
